# EUROPÄISCHE PATENTSCHRIFT

(11) **EP 1 036 895 B1**
(45) Veröffentlichungstag und Bekanntmachung des Hinweises auf die Patenterteilung: **22.05.2002**
(21) Anmeldenummer: 99810996.1
(22) Anmeldetag: 02.11.1999
(51) Int. Cl.: E04F 11/18

(54) **Rohrabschlussdeckel**
Cover plate for a tube
Couvercle de fermeture pour un tube

(30) Priorität: 10.03.1999 CH 44199
(43) Veröffentlichungstag der Anmeldung: 20.09.2000
(73) Patentinhaber: Blaas, Martin, 3600 Thun (CH)
(72) Erfinder: Blaas, Martin, 3600 Thun (CH)
(74) Vertreter: Meier, Hans Peter

(56) Entgegenhaltungen:
- EP-A- 0 658 665
- GB-A- 2 147 079
- GB-A- 2 161 993
- US-A- 3 667 640
- US-A- 5 529 288
- US-A- 5 584 469
- US-A- 5 657 670

## Beschreibung

Die vorliegende Erfindung betrifft einen Rohrabschlussdeckel zum Verschliessen eines offenen Rohrendes mit einem Aussendurchmesser und einem Innendurchmesser, insbesondere eines Handlaufs, welcher Rohrabschlussdeckel einen Metallteil mit einer Scheibe und einem Gewindestift, einen eine Bohrung aufweisenden Teil und eine Metallmutter umfasst, wobei der Teil mit seiner Bohrung auf dem Gewindestift aufgesteckt und mittels der aufgeschraubten Mutter gegen die Scheibe gepresst ist.

Bei aus Metall, beispielsweise aus INOX gefertigten Handläufen, wird normalerweise das offene Rohrende mit einem Abschlussdeckel verschlossen.

Der Abschlussdeckel kann ein dem Innendurchmesser des Handlaufs entsprechender Bolzen aus dem gleichen Metall wie das Rohr, z.B. INOX sein. Ein solcher Abschlussdeckel wirkt äusserst ästhetisch und dekorativ, da er den gleichen optischen Eindruck wie der Handlauf bewirkt. Sein Nachteil liegt aber im hohen Metallpreis und wenn er nicht genau dem Rohrinnendurchmesser entspricht, kann er sich aus dem Rohr lösen oder er kann gar nicht erst eingesetzt werden.

Der hohe Metallpreis kann vermieden werden, wenn der Abschlussdeckel aus Kunststoff gefertigt wird, der zudem noch besser im Rohr befestigt werden kann. Sein Nachteil ist aber der unschöne Anblick im dekorativen Handlauf.

Aus der Patentschrift GB-A-2 161 993 ist zwar eine zwei Endplatten aus Aluminium, einen hohlen zylindrischen Gummiteil und eine Mutter aufweisende Rohrdichtung bekannt geworden, bei der die erste Endplatte mit einem Schraubenschaft versehen ist, so dass der Gummiteil mittels der Mutter zwischen die beiden Endplatten aufgepresst wird. Diese Rohrdichtung dient aber nur zum Einschlagen in den lichten Querschnitt und damit sicherem Verschliessen nicht benutzter Sanitär-, Kabel- oder Pipelinerohre für Erdgas oder Erdöl und sie bildet keinen Rohrabschlussdeckel.

Die US 5657670 A zeigt einen Dichtungszapfen, der das Hauptrohr und das Rohr der Vordergabel eines Velos abdeckt und dessen Kontur mit dem Querschnitt des Hauptrohrs übereinstimmt.

In der US 5529288 A ist eine Schutzkappe zum Abdecken eines komplizierten Profils eines Handlaufs offenbart, wobei aber die Abdeckung das Profil teilweise überlappt. Über die Befestigung der Schutzkappe ist nichts erwähnt.

Die Erfindung stellt sich nun die Aufgabe, einen Rohrabschlussdeckel zu schaffen, der die erwähnten Nachteile vermeidet, die erwähnten Vorteile hingegen in Kombination aufweist. Diese Aufgabe wird nun durch einen Rohrabschlussdeckel gelöst, der die kennzeichnenden Merkmale des unabhängigen Patentanspruchs 1 aufweist. Bevorzugte Weiterentwicklungen des Erfindungsgegenstandes sind in den abhängigen Patentansprüchen aufgeführt.

Nachfolgend wird ein Ausführungsbeispiel der Erfindung anhand der schematischen Zeichnung näher erläutert. Es zeigen:

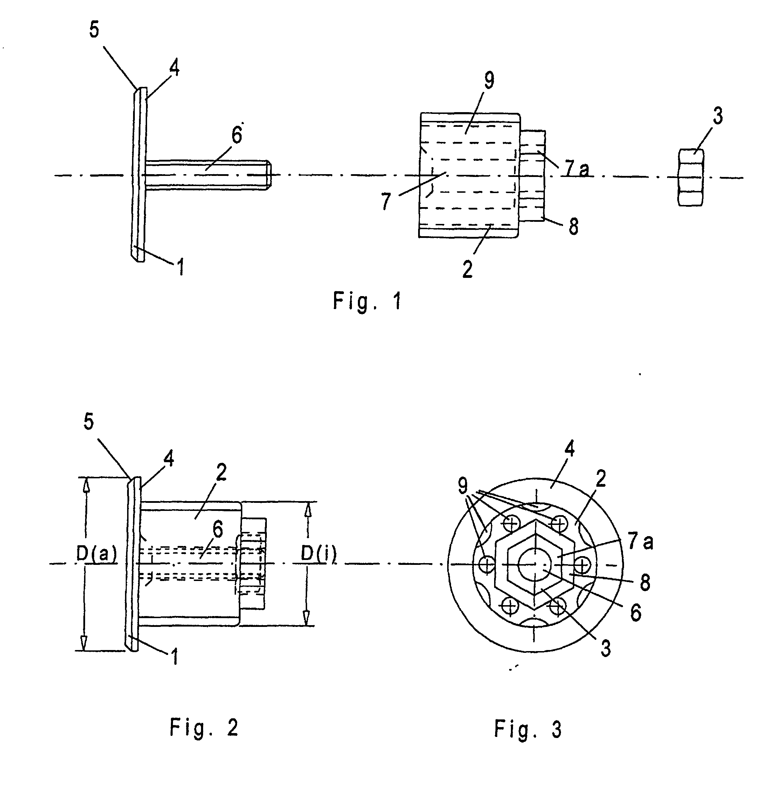

Fig. 1 die drei für den Rohrabschlussdeckel notwendigen Einzelteile,
Fig. 2 den zusammengesetzten fertigen Rohrabschlussdeckel in der Seitenansicht und
Fig. 3 den Rohrabschlussdeckel der Fig. 2 in der Ansicht von hinten.

Der Metallteil 1 aus INOX umfasst eine Scheibe 4, deren Durchmesser D(a) dem Aussendurchmesser des zu verschliessenden Rohrs entspricht und die eine Abschrägung 5 aufweist. Die Scheibe 4 muss nicht unbedingt eine ebene Form aufweisen, da sie auch kugelförmig gebogen, bombiert oder hohlkegelförmig ausgeführt sein kann. Mit der Scheibe 4 ist ein beispielsweise mit einem M8 Gewinde versehener Stift 6 verbunden, der bevorzugt in die Scheibe eingeschossen ist. Der bolzenförmige Kunststoffteil 2 aus beispielsweise Hartpolyäthylen besitzt einen Durchmesser D(i), der dem Innendurchmesser des zu verschliessenden Rohrs entspricht. Zum Einsetzen des Gewindestifts 6 weist er im Zentrum eine durchgehende Bohrung 7 auf und am hinteren Ende ist er zur besseren Handhabung mit einem Sechskant 8 versehen. Im Sechskantteil 8 erweitert sich die Bohrung 7 zur Bohrung 7a, damit genügend Raum zum Anziehen der Mutter 3 aus INOX auf dem Gewindestift 6 vorhanden ist. Weiter sind im Kunststoffteil 2 mehrere Ausnehmungen 9 vorhanden.

Zur äusserst einfachen Montage des Rohrabschlussdeckels wird der Kunststoffteil 2 auf den Gewindestift 6 aufgesteckt und mit der Mutter 3 festgeschraubt. Wegen der zahlreichen Ausnehmungen 9 lässt sich der Kunststoffteil zusammenpressen, so dass er zum klemmenden Rohrabschluss eine grössere Toleranz, zwischen dem Durchmesser D(i) und einem geringfügig grösseren Durchmesser aufweisen kann. Die Ausnehmungen 9 erstrecken sich durchgehend über die axiale Länge des Kunststoffteils 2 und können sich in seinem Inneren oder an seiner Peripherie befinden.

## Patentansprüche

1. Rohrabschlussdeckel zum Verschliessen eines offenen Rohrendes mit einem Aussendurchmesser und einem Innendurchmesser, insbesondere eines Handlaufs, welcher Rohrabschlussdeckel einen Metallteil (1) mit einer Scheibe (4) und einem Gewindestift (6), einen eine Bohrung (7) aufweisenden Teil (2) und eine Metallrnutter (3) umfasst, wobei der Teil (2) mit seiner Bohrung (7) auf dem Gewindestift (6) aufgesteckt und mittels der aufgeschraubten Mutter (3) gegen die Scheibe (4) gepresst ist, **dadurch gekennzeichnet, dass** der Durchmesser D(a) der Scheibe (4) bzw. der Durchmesser D(i) des Teils (2) um ein Rohr zu verschliessen frei wählbar ist derart dass der Durchmesser (Da) dem Aussendurchmesser bzw. der Durchmesser (Di) dem Innendurchmesser des zu verschliessenden Rohrs entspricht, dass der Metallteil (1) aus nichtrostendem Stahl und der Teil (2) aus Kunststoff besteht und dass der Kunststoffteil mehrere axial durchgehende Ausnehmungen (9) aufweist.

2. Rohrabschlussdeckel nach Anspruch 1, **dadurch gekennzeichnet, dass** der Kunststoffteil (2) aus Hartpolyäthylen besteht.

3. Rohrabschlussdeckel nach Anspruche 1 oder 2, **dadurch gekennzeichnet, dass** die Ausnehmungen (9) im Innern und an der Peripherie des Kunststoffteils (2) angeordnet sind.

4. Rohrabschlussdeckel nach einem der Ansprüche 1 bis 3, **dadurch gekennzeichnet, dass** das hintere Ende des Kunststoffteils (2) als Sechskantteil (8) ausgebildet ist, in welchem die Bohrung (7a) gegenüber der durchgehenden Bohrung (7) grösser ausgeführt ist.

## Claims

1. Tube end plate for closing an open tube end having an outside diameter and an inside diameter, in particular of a hand rail, which tube end plate comprises a metal element (1) having a disc (4) and a threaded shank (6), an element (2) which has a hole (7), and a metal nut (3), the element (2) being pushed on the threaded shank (6) by means of the hole (7) thereof and being pressed against the disc (4) by means of the screwed-on nut (3), **characterised in that**, in order to close a tube, the diameter D(a) of the disc (4) and/or the diameter D(i) of the element (2) is freely selectable in such a manner that the diameter D(a) corresponds to the outside diameter and/or the diameter D(i) corresponds to the inside diameter of the tube to be closed, **in that** the metal element (1) is of stainless steel and the element (2) is of plastics material, and **in that** the plastics element has a plurality of axially continuous recesses (9).

2. Tube end plate according to claim 1, **characterised in that** the plastics element (2) is of high-density polyethylene.

3. Tube end plate according to claim 1 or 2, **characterised in that** the recesses (9) are arranged inside and on the periphery of the plastics element (2).

4. Tube end plate according to any one of claims 1 to 3, **characterised in that** the rear end of the plastics element (2) is in the form of a hexagonal element (8), in which the hole (7a) is constructed larger in comparison with the continuous hole (7).

## Revendications

1. Bouchon pour fermer une extrémité de tube ouverte comprenant un diamètre extérieur et un diamètre intérieur, notamment une main courante, lequel bouchon comporte une partie métallique (1) avec une rondelle (4) et une tige filetée (6), une partie (2) présentant un perçage (7) et un écrou métallique (3), sachant que la partie (2) est enfilée à l'aide de son perçage (7) sur la tige filetée (6) et est appuyée contre la rondelle (4) à l'aide de l'écrou (3) vissé, **caractérisé en ce que** le diamètre D(a) de la rondelle (4) ou le diamètre D(i) de la partie (2) pour fermer un tube peut être choisi librement, de manière à ce que le diamètre D(a) corresponde au diamètre extérieur et le diamètre D(i), au diamètre intérieur du tube à obturer, **en ce que** la partie métallique (1) est en acier inoxydable et la partie (2), en matière plastique, et **en ce que** la partie en matière plastique présente plusieurs évidements (9) la traversant axialement.

2. Bouchon pour fermer un tube selon la revendication 1, **caractérisé en ce que** la partie en matière plastique (2) est constituée de polyéthylène haute densité.

3. Bouchon pour fermer un tube selon la revendication 1 ou 2, **caractérisé en ce que** les évidements (9) sont disposés à l'intérieur et à la périphérie de la partie en matière plastique (2).

4. Bouchon pour fermer un tube selon l'une des revendications 1 à 3, **caractérisé en ce que** l'extrémité arrière de la partie en matière plastique (2) est réalisée en tant que six-pans (8) dans laquelle le perçage (7a) est plus grand que le perçage traversant (7).
